# EUROPÄISCHE PATENTANMELDUNG

(11) **EP 1 715 301 A2**
(43) Veröffentlichungstag der Anmeldung: **25.10.2006**
(21) Anmeldenummer: 06006525.7
(22) Anmeldetag: 29.03.2006
(51) Int. Cl.: G01F 1/60

(54) **Verfahren zum Betrieb eines Messgeräts**

(30) Priorität: 19.04.2005 DE 102005018179
(71) Anmelder: KROHNE MESSTECHNIK GMBH & CO. KG, 47058 Duisburg (DE)
(72) Erfinder: Florin, Wilhelm, 47198 Duisburg (DE)
(74) Vertreter: Gesthuysen, von Rohr & Eggert

(57) **Zusammenfassung**

Die Erfindung betrifft ein Verfahren zum Betrieb eines Meßgeräts, dessen Meßbetrieb mit einer Meßfrequenz getaktet wird. Erfindungsgemäß ist vorgesehen, daß die im Meßbetrieb erfaßten Meßdaten einer Frequenzanalyse unterworfen werden und die Meßfrequenz automatisch in Abhängigkeit von dem damit erfaßten Frequenzspektrum gesteuert wird. Auf diese Weise wird ein gutes Signal-zu-Rauscb-Verhätmis erzielt.

## Beschreibung

Die Erfindung betrifft ein Verfahren zum Betrieb eines Meßgeräts, dessen Meßbetrieb mit einer Meßfrequenz getaktet wird.

Ein Beispiel für ein derartiges Verfahren ist der Meßbetrieb eines magnetisch-induktiven Durchflußmeßgeräts. Ein solches magnetisch-induktives Durchflußmeßgerät dient zur Messung des Durchflusses eines strömenden Mediums durch ein Meßrohr, wobei mit Hilfe wenigstens einer Magnetspule ein Magnetfeld erzeugt wird, das eine senkrecht zur Meßrohrachse verlaufende Magnetfeldkomponente aufweist, und über zwei Meßelektroden die in dem Medium induzierte Spannung abgegriffen wird. Das grundlegende Prinzip eines magnetisch-induktiven Durchflußmeßgeräts geht bereits auf Faraday zurück, der im Jahre 1832 vorgeschlagen hat, das Prinzip der elektrodynamischen Induktion zur Strämungsgeschwindigkeitsmessung anzuwenden. Nach dem Faraday'schen Induktionsgesetz entsteht in einem strömenden Medium, das Ladungsträger mit sich führt und durch ein Magnetfeld hindurchfließt, eine elektrische Feldstärke senkrecht zur Strömungsrichtung und senkrecht zum Magnetfeld. Das Faraday'sche Induktionsgesetz wird bei einem magnetisch-induktiven Durchflußmeßgerät dadurch ausgenutzt, daß mittels einer Magnetspule ein Magnetfeld erzeugt wird, das eine Magnetfeldkomponente aufweist, die senkrecht zur Strömungsrichtung verläuft. Innerhalb dieses Magnetfelds liefert jedes sich durch das Magnetfeld bewegende und eine gewisse Anzahl von Ladungsträgern aufweisende Volumenelement des strömenden Mediums mit der in diesem Volumenelement entstehenden Feldstärke einen Beitrag zu einer über die Meßelektroden abgreifbaren Meßspannung.

Die Meßelektroden werden bei herkömmlichen magnetisch-induktiven Durchflußmeßgeräten derart ausgeführt, daß sie entweder galvanisch oder kapazitiv mit dem strömenden Medium gekoppelt sind. Ein besonderes Merkmal der magnetisch-induktiven Durchflußmeßgeräte ist ferner die Proportionalität zwischen der Meßspannung und der über den Querschnitt des Meßrohrs gemittelten Strömungsgeschwindigkeit des Mediums, d. h. Zwischen Meßspannung und Volumenstrom.

Die an den Meßelektroden abgreifbare durchflußabhängige Meßspannung liegt typischerweise im Bereich von einigen Mikrovolt bis einigen Millivolt. Häufig zeigt sich jedoch eine Überlagerung dieser Meßspannung mit Störspannungen. Bei den Störspannungen fmden sich typischerweise verschiedene Frequenzen, wie die Frequenz der Energieversorgung des Meßgeräts sowie die Hubfrequenz von Pumpen. Je nach Impedanz des Eingangskreises kann die Amplitude der Störspannungen einige 100 mV betragen.

Damit ergibt sich die Aufgabe der Erfindung, ein derartiges Verfahren zum Betrieb eines Meßgeräts, insbesondere eines magnetisch-induktiven Durchflußmeßgeräts, anzugeben, das ein gutes Signal-zu-Rausch-Verhältnis zeigt.

Ausgehend von dem eingangs beschriebenen Verfahren ist die zuvor genannte Aufgabe dadurch gelöst, daß die im Meßbetrieb erfaßten Meßdaten einer Frequenzanalyse unterworfen werden und die Meßfrequenz automatisch in Abhängigkeit von dem damit erfaßten Frequenzspektrum gesteuert wird.

Erfindungsgemäß ist also die Meßfrequenz, die die Taktung des Meßbetriebs bestimmt, nicht vorbestimmt, sondern wird in Abhängigkeit von den erfaßten Störfrequenzen gesteuert. Dabei gibt es eine Mehrzahl von Möglichkeiten, die Meßfrequenz zu steuern:

Grundsätzlich kann gemäß einer bevorzugten Weiterbildung der Erfindung vorgesehen sein, daß die Meßfrequenz automatisch derart gesteuert wird, daß ein Meßsignal mit dem besten erzielbaren Signal-zu-Rausch-'V'erhältnis erhalten wird. Die Meßfrequenz wird dabei also kontinuierlich in Abhängigkeit von dem erfaßten Störspektrum gesteuert, und zwar derart, daß jeweils ein optimales Signal-zu-Rausch-Verhältnis des Meßsignals erhalten wird. Wesentlich ist dabei, daß auf diese Weise während des Betriebs des Meßgeräts auf Änderungen des Störspektrums unmiftelbar reagiert wird, da bei Wegfall einer Störfrequenz automatisch und utogehend eine Steuerung der Meßfrequenz in Abhängigkeit von dem neuen Störspektrum erfolgt, so daß die Meßfrequenz gegebenenfalls auf andere Werte eingestellt werden kann, die zu einem noch weiter verbesserten Signal-zu-Rausch-Verhältnis fuhren.

Im allgemeinen wird das Störspektrum eine Mehrzahl von Hauptfrequenzen aufweisen, die gegenüber dem Rauschen klar hervortreten. Dabei ist gemäß einer bevorzugten Weiterbildung der Erfindung vorgesehen, daß die Meßfrequenz in Abhängigkeit von wenigstens einer erfaßten Hauptfrequenz des erfaßten Spektrums automatisch gesteuert wird. Dies kann auf unterschiedliche Weisen erfolgen. Insbesondere ist gemäß einer bevorzugten Weiterbildung der Erfindung vorgesehen, daß die Meßfrequenz automatisch auf eine erfaßte Hauptfrequenz, auf ein ganzzahliges Vielfaches einer erfaßten Hauptfrequenz oder auf einen ganzzahligen Bruchteil einer erfaßten Hauptfrequenz gesteuert wird.

Alternativ dazu kann gemäß einer bevorzugten Weiterbildung der Erfindung vorgesehen sein, daß die Meßfrequenz automatisch auf eine von der erfaßten Hauptfrequenz verschiedene Frequenz gesteuert wird. Dabei kann gemäß einer bevorzugten Weiterbildung der Erfindung ferner ein vorbestimmter Frequenzbereich für die Meßfrequenz vorgesehen sein, wobei die Meßfrequenz innerhalb des vorbestimmten Frequenzbereichs automatisch mit insgesamt maximalem Frequenzabstand von einer Mehrzahl von erfaßten Hauptfrequenzen gesteuert wird.

Grundsätzlich kann die Frequenzanalyse ohne Berücksichtigung der Phasen der erfaßten Schwingungen erfolgen. Gemäß einer bevorzugten Weiterbildung der Erfindung ist jedoch vorgesehen, daß die Frequenzanalyse phasensensitiv durchgeführt wird. Dabei ist gemäß einer bevorzugten Weiterbildung der Erfmdung ferner vorgesehen, daß die Taktung des Meßbetriebs phasenabhä,ngig gesteuert wird, vorzugsweise nämlich phasenstarr zur Phase einer erfaßten Schwingung, deren Frequenz zur Steuerung der Meßfrequenz, wie oben beschrieben, verwendet wird.

Wie zuvor schon ausgeführt, ist das erfindungsgemäße Verfahren insbesondere für ein magnetisch-induktives Durchflußmeßgerät geeignet. Dementsprechend liegt eine bevorzugte Weiterbildung der Erfmdung darin, daß als Meßgerät ein magnetisch-induktives Durchflußmeßgerät mit einer Magnetspule und einem Meßrohr mit zwei Meßelektroden vorgesehen ist, wobei die Magnetspule mit der Meßfrequenz getaktet mit einem Spulenstrom beaufschlagt wird, über die beiden Meßelektroden eine Spannung abgegriffen wird, die abgegriffene Spannung einer Frequenzanalyse unterworfen wird und die Meßfrequenz, mit der die Magnetspule mit einem Spulenstrom beaufschlagt wird, in Abhängigkeit von dem erfaßten Frequenzspektrum gesteuert wird. Dabei ist gemäß einer bevorzugten Weiterbildung der Erfindung insbesondere vorgesehen, daß die Magnetspule mit einem wechselnden Konstantstrom beaufschlagt wird.

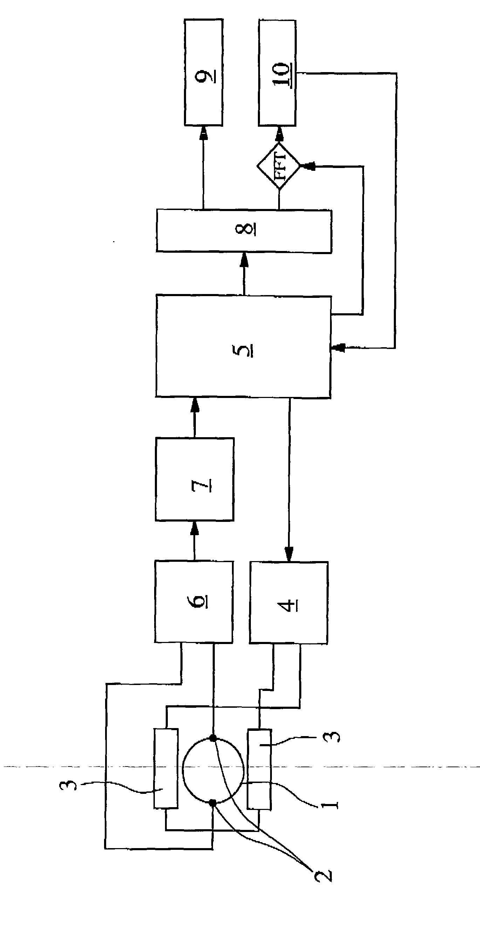

Im einzelnen gibt es eine Vielzahl von Möglichkeiten, das erfindungsgemäße Verfahren auszugestalten und weiterzubilden. Dazu wird auf die dem Patentanspruch 1 nachgeordneten Patentansprüche sowie auf die nachfolgende detaillierte Beschreibung eines bevorzugten Ausführungsbeispiels der Erfindung unter Bezugnahme auf die Zeichnung verwiesen. In der Zeichnung zeigt die einzige Figur schematisch ein magnetisch-induktives Durchflußmeßgerät, das mit einem Verfahren gemäß einem bevorzugten AusfdhrungsbEispiel der Erfindung betrieben wird.

Das in der Figur dargestellte magnetisch-induktive Durchflußmeßgerät weist ein Meßrohr 1 mit zwei Meßelektroden 2 auf, über die eine in einem das Meßrohr 1 durchfließenden Medium induzierte Spannung abgegriffen werden kann. Das dafür erforderliche Magnetfeld wird mittels zweier Magnetspulen 3 erzeugt.

Zur Beaufschlagung der Magnetspulen 3 mit einem Spulenstrom ist nun ein Feldstromgenerator 4 vorgesehen. Dabei wird der Feldstromgenerator 4 von einem Mikrocontroller 5 derart angesteuert, daß die Magnetspulen 3, getaktet mit einer vorbestimmten Meßfrequenz, mit einem wechselnden Konstantstrom beaufschlagt werden. Zur Bestimmung der Meßfrequenz, mit der der Meßbetrieb des magnetisch-induktiven Durchflußmeßgeräts getaktet wird, wird nun folgendermaßen vorgegangen:

Die in dem strömenden Medium aufgrund des Magnetfelds induzierte Spannung wird über die Meßelektroden 2 abgegriffen und dann einem Vorverstärker 6 sowie nachfolgend einem Analog-Digital-Wandler 7 zugeführt. Außer der in dem Medium induzierten Spannung koppeln jedoch auch Störspannungen ein, die, wie die induzierte Spannung, über einen Vorverstärker 6 und einen Analog-Digital-Wandler 7 dem Mikrocontroller 5 zugeführt werden. Die damit erfaßten Werte werden in einem mit dem Mikrocontroller 5 verbundenen Speicher 8 abgelegt, so daß die im Meßbetrieb erfaßten Meßdaten unter der Kontrolle des Mikrocontrollers 5 einer Frequenzanalyse, vorliegend nämlich einer FFT-Analyse (Fast Fourier Transform) unterzogen werden. Damit ergibt sich ein Frequenzspektrum, das sich aus dem eigentlichen Nutzsignal 9. das separat ausgegeben wird, und dem Störspektrum 10 zusammensetzt.

Das Störspektrum 10 wird nun dem Mikrocontroller 5 wieder zur Verfügung gestellt, so daß damit eine Steuerung der Meßfrequenz erfolgen kann. Gemäß dem vorliegend beschriebenen bevorzugten Ausführungsbeispiel der Erfindung ist dabei vorgesehen, daß die Meßfrequenz automatisch auf eine erfaßte Hauptfrequenz in dem Störspektrum, vorzugsweise nämlich auf die dominanteste Störfrequenz, gesteuert wird. Darüber hinaus ist vorliegend ferner vorgesehen, daß die Frequenzanalyse phasensensitiv durchgeführt wird, so daß die Taktung des Meßbetriebs phasenabhängig gesteuert werden kann, nämlich phasenstarr zur erfaßten Phase der Schwingung mit der Hauptfrequenz, über die die Meßfrequenz gesteuert wird.

Im Ergebnis wird damit ein magnetisch-induktives Durchftußmeßverfahren erzielt, das ein sehr gutes Signal-zu-Rausch-Verhälinis aufweist, ohne daß es zu wesentlichen Störungen durch einkoppelnde Störspannungen kommt.

## Patentansprüche

1. Verfahren zum Betrieb eines Meßgeräts, dessen Meßbetrieb mit einer Meßfrequenz getaktet wird, **dadurch gekennzeichnet, daß** die im Meßbetrieb erfaßten Meßdaten einer Frequenzanalyse unterworfen werden und die Meßfrequenz automatisch in Abhängigkeit von dem damit erfaßten Frequenzspektrum gesteuert wird.

2. Verfahren nach Anspruch 1, **dadurch gekennzeichnet, daß** die Meßfrequenz automatisch derart eingestellt wird, daß ein Meßsignal mit dem besten erzielbaren Signal-zu-Rausch-Verhältnis erhalten wird.

3. Verfahren nach Anspruch 1, **dadurch gekennzeichnet, daß** die Meßfrequenz in Abhängigkeit von wenigstens einer erfaßten Hauptfrequenz des erfaßten Frequenzspektrums gesteuert wird.

4. Verfahren nach Anspruch 3, **dadurch gekennzeichnet, daß** die Meßfrequenz automatisch auf eine erfaßte Hauptfrequenz, auf ein ganzzahliges Vielfaches einer erfaßten Hauptfrequenz oder auf einen ganzzahligen Bruchteil einer erfaßten Hauptfreguenz gesteuert wird.

5. Verfahren nach Anspruch 3, **dadurch gekennzeichnet, daß** die Meßfrequenz automatisch auf eine von der erfaßten Hauptfrequenz verschiedene Frequenz gesteuert wird.

6. Verfahren nach Anspruch 3, **dadurch gekennzeichnet, daß** ein vorbestimmter Frequenzbereich für die Meßfrequenz vorgesehen ist und die Meßfrequenz innerhalb des vorbestimmten Frequenzbereichs automatisch mit insgesamt maximalem Frequenzabstand von einer Mehrzahl von erfaßten Hauptfrequenzen gesteuert wird.

7. Verfahren nach einem der Ansprüche 1 bis 6, **dadurch gekennzeichnet, daß** die Frequenzanalyse phasensensitiv durchgeführt wird.

8. Verfahren nach Anspruch 7, **dadurch gekennzeichnet, daß** die Taktung des Meßbetriebs phasenabhängig gesteuert wird, vorzugsweise phasenstarr zu einer erfaßten Phase.

9. Verfahren nach einem der Ansprüche 1 bis 8, **dadurch gekennzeichnet, daß** als Meßgerät ein magnetisch-induktives Aurchflußmeßgerät mit einer Magnetspule (3) und einem Meßrohr (1) mit zwei Meßelektroden (2) vorgesehen ist, wobei die Magnetspule (3) mit der Meßfrequenz getaktet mit einem Spulenstrom beaufschlagt wird, über die beiden Meßelektroden (2) eine Spannung abgegriffen wird, die abgegriffene Spannung einer Frequenzanalyse unterworfen wird und die Meßfrequenz, mit der die Magnetspule (3) mit dem Spulenstrom beaufschlagt wird, in Abhängigkeit von dem erfaßten Frequenzspektrum gesteuert wird.

10. Verfahren nach Anspruch 9, **dadurch gekennzeichnet, daß** die Magnetspule (3) mit einem wechselnden Konstantstrom beaufschlagt wird.
